(19) **Europäisches Patentamt**

**European Patent Office**

**Office européen des brevets**

(11) **EP 1 188 478 B1**

(12) **EUROPEAN PATENT SPECIFICATION**

(45) Date of publication and mention
of the grant of the patent:
**23.08.2006 Bulletin 2006/34**

(51) Int Cl.:
*B01J 20/30* (2006.01)          *B01J 20/28* (2006.01)
*B01J 20/18* (2006.01)          *B01D 53/04* (2006.01)
*B01D 53/047* (2006.01)

(21) Application number: **01307953.8**

(22) Date of filing: **18.09.2001**

(54) **Process for producing an adsorbent for gas separation processes**

Verfahren zur Herstellung von Adsorptionsmittel für Gastrennungsverfahren

Procédé pour produire un adsorbant de séparation de gazes

(84) Designated Contracting States:
**AT BE CH CY DE DK ES FI FR GB GR IE IT LI LU MC NL PT SE TR**

(30) Priority: **09.11.2000 US 710022**
**18.09.2000 US 664568**

(43) Date of publication of application:
**20.03.2002 Bulletin 2002/12**

(73) Proprietor: **THE BOC GROUP, INC.**
**New Providence, New Jersey 07974 (US)**

(72) Inventors:
 • **Jale, Sukhakar Reddy**
 **Scotch Plains,**
 **New Jersey 07076 (US)**
 • **Fitch, Frank Roger**
 **Bedminster,**
 **New Jersey, 07921 (US)**
 • **Shen, Dongmin**
 **Berkeley Heights,**
 **New Jersey (US)**

(74) Representative: **Wickham, Michael et al**
**C/o Patent and Trademark Department**
**The BOC Group plc**
**Chertsey Road**
**Windlesham**
**Surrey GU20 6HJ (GB)**

(56) References cited:
 **EP-A- 0 297 542**          **EP-A- 0 826 631**
 **EP-A- 1 046 422**          **EP-A- 1 070 531**
 **US-A- 5 580 369**          **US-A- 5 685 897**

• **DATABASE WPI Section Ch, Week 199807 Derwent Publications Ltd., London, GB; Class E34, AN 1998-075570 XP002186269 & RU 2 081 231 C (VOLZHSK CELLULOSE PAPER IND RES INST), 10 June 1997 (1997-06-10)**
• **DATABASE WPI Section Ch, Week 198822 Derwent Publications Ltd., London, GB; Class A97, AN 1988-151932 XP002186217 & JP 63 093350 A (AZUMI ROSHI KK), 23 April 1988 (1988-04-23)**
• **DATABASE COMPENDEX [Online] ENGINEERING INFORMATION, INC., NEW YORK, NY, US; LI Y Y ET AL: "Zeolite monoliths for air separation. Part 1: Manufacture and characterization" Database accession no. EIX99154568904 XP002186270 & CHEM ENG RES DES TRANS INST CHEM ENG PT A;CHEMICAL ENGINEERING RESEARCH & DESIGN, TRANSACTIONS OF THE INSTITUTE OF CHEMICAL ENGINEERS, PART A NOV 1998 ICHEME, RUGBY, ENGL, vol. 76, no. A8, November 1998 (1998-11), pages 921-930,**
• **PATENT ABSTRACTS OF JAPAN vol. 009, no. 091 (C-277), 19 April 1985 (1985-04-19) & JP 59 223220 A (SHINTOUHOKU KAGAKU KOGYO KK; OTHERS: 01), 15 December 1984 (1984-12-15)**

**Description**

The present invention provides for methods for preparing an adsorbent containing sheet, their preparation into adsorbent monoliths and their subsequent use in gas / air separation processes.

Cyclic adsorption processes are frequently used to separate the components of a gas mixture. Typically, cyclic adsorption processes are conducted in one or more adsorbent vessels that are packed with a particulate adsorbent material which adsorbs at least one gaseous component of the gas mixture more strongly than it adsorbs at least one other component of the mixture. The adsorption process comprises repeatedly performing a series of steps, the specific steps of the sequence depending upon the particular cyclic adsorption process being carried out.

In any cyclic adsorption process, the adsorbent bed has a finite capacity to adsorb a given gaseous component and, therefore, the adsorbent requires periodic regeneration to restore its adsorption capacity. The procedure followed for regenerating the adsorbent varies according to the process. In VSA processes, the adsorbent is at least partially regenerated by creating vacuum in the adsorption vessel, thereby causing adsorbed component to be desorbed from the adsorbent, whereas in PSA processes, the adsorbent is regenerated at atmospheric pressure. In both VSA and PSA processes, the adsorption step is carried out at a pressure higher than the desorption or regeneration pressure.

A typical VSA process generally comprises a series of four basic steps that include (i) pressurization of the bed to the required pressure, (ii) production of the product gas at required purity, (iii) evacuation of the bed to a certain minimum pressure, and (iv) purging the bed with product gas under vacuum conditions. In addition a pressure equalization or bed balance step may also be present. This step basically minimizes vent losses and helps in improving process efficiency. The PSA process is similar but differs in that the bed is depressurised to atmospheric pressure and then purged with product gas at atmospheric pressure.

As mentioned above, the regeneration process includes a purge step during which a gas stream that is depleted in the component to be desorbed is passed countercurrently through the bed of adsorbent, thereby reducing the partial pressure of adsorbed component in the adsorption vessel which causes additional adsorbed component to be desorbed from the adsorbent. The non-adsorbed gas product may be used to purge the adsorbent beds since this gas is usually quite depleted in the adsorbed component of the feed gas mixture. It often requires a considerable quantity of purge gas to adequately regenerate the adsorbent. For example, it is not unusual to use half of the non-adsorbed product gas produced during the previous production step to restore the adsorbent to the desired extent. The purge gas requirement in both VSA and PSA processes are optimisation parameters and depend on the specific design of the plant and within the purview of one having ordinary skill in the art of gas separation.

Many process improvements have been made to this simple cycle design in order to reduce power consumption, improve product recovery and purity, and increase product flow rate. These have included multi-bed processes, single-column rapid pressure swing adsorption and, more recently, piston-driven rapid pressure swing adsorption and radial flow rapid pressure swing adsorption. The trend toward shorter cycle times is driven by the desire to design more compact processes with lower capital costs and lower power requirements. The objective, has been to develop an adsorbent configuration that demonstrates a low pressure drop, a fast pressurization time and an ability to produce the required purity of oxygen.

For the details as to the manufacture of adsorbent sheets and the construction of monoliths used for dehumidification purposes, reference is made to US-A-5,660,048, US-A-5,660,221, US-A-5,685,897, US-A-5,580,369 and US-A-4,012,206. For example, monolithic adsorbents in the shape of wheels can be fabricated from an adsorbent paper which contains a adsorbent material. The adsorbent paper is prepared from a natural or synthetic fibre material. This fibre material can be combined with the adsorbent and wet-laid into a continuous sheet or hand sheet. This wet-laying is achieved by forming a slurry of the fibre, the adsorbent and binder components in water. This slurry is then transferred to a hand sheet mould or to the head box of a continuous wire paper machine for introduction onto a Fourdrinier or Twin-Wire paper machine. The adsorbent can contain zeolites, silica gels and/or alumina.

In a typical papermaking process, water from rivers, lakes or municipality supplies is used. When zeolite needs to be incorporated into the paper, these large quantities of water will have two negative effects on the performance of zeolite in a separation process. The first arises from the ion exchange of cations between the process water and zeolite and second one is the hydrolysis of zeolite cations leading to a protonic exchange. If the papermaking process is carried out at higher temperatures, the hydrolysis of zeolitic cations will be even more significant. Depending on the type of separation or catalytic application, the modification in chemical composition of zeolite can have dramatic effect on the performance.

Li-containing molecular sieves are widely used in air separation process selectively to adsorb $N_2$ in preference to $O_2$, thereby producing $O_2$ as a non-adsorbed product gas (see EP-A-0 297 542) in a continuous process in a multiple bed operation we have found that if the process water contains cations such as Na, Ca and Mg, which are found in typical water supplies the exchange of these cations into Li-sieve will lead a decrease in the Li content of zeolite and consequently a decrease on the sorption capacity of $N_2$ and a decrease in $N_2/O_2$ selectivity. However, if the sorbate molecule say, water as in a dehumidification application has stronger interaction with cations, the partial ionexchange of zeolite cations from the process water may not have significant influence on the performance of the adsorbent. Hence, in an adsorption process involving weaker interactions, retaining the preferred original composition of the zeolite during the papermaking process is crucial.

The present invention provides means to keep the original composition of the adsorbent by preventing the leaching of cations from the zeolite both during the preparation of stock preparation, and during and after the manufacture of the paper. It also provides a method for decreasing the hydrolysis of zeolite cations, when a slurry containing zeolite is coated or impregnated on to various substrates.

## SUMMARY OF THE INVENTION

According to the present invention there is provided a method of preparing an adsorbent containing sheet as set out in Claim 1 below. The invention also provides a method of separating a gaseous component from a gas mixture as set out in claim 11.

The monolith adsorbents that have been prepared by a method according to the invention demonstrate improved nitrogen capacity and nitrogen/oxygen selectivity in air separation processes such as vacuum swing adsorption (VSA) or pressure swing adsorption (PSA) processes.

## DETAILED DESCRIPTION OF THE INVENTION

The method of preparing an adsorbent-containing sheet according to the invention may, for example, comprise the steps of:

(a) mixing together a slurry of fibre, the type X adsorbent containing lithium cations, retention aid, and a binder in deionised water;

(b) adding the lithium salt to the slurry;

(c) removing the water from the slurry; and

(d) forming the adsorbent containing sheet.

Alternatively, the slurry may comprise water, fibre and the type X adsorbent containing lithium cations, and the lithium salt is added to the slurry prior to the addition of the other papermaking chemical additives such as dry-strength adhesives, wet strength resins, defoamers, retention and drainage aids. Although these methods of addition are preferred, the lithium salt can be added at any stage during the slurry or stock preparation process.

In a method according to the present invention, the slurry may be first formed using deionised (DI) water in a mixing container that is typically a mild steel or stainless steel tank or a polymer-lined vessel. The use of DI water prevents cations contained in other sources of water from replacing the lithium cations in the X type adsorbent zeolite. The slurry is made by adding fibre, which can be either synthetic or natural, to the DI water. The X type adsorbent material containing lithium cations, is then added to the fibre slurry either in the powder form or by mixing with water. In the following stages, a binder, a retention aid and optionally a pore filling agent are added.

Suitable synthetic organic polymeric fibres for use in the method according to the invention include aromatic polyamides, polyesters, polyvinyl chlorides, nylons, acrylics, polyethylenes, polypropylenes, acrylonitrile homopolymers, copolymers with halogenated monomers, styrene copolymers, and mixtures of polymers (polypropylene with low-density polyethylene, and high density polyethylene with polystyrene). The inorganic fibres include glass or metal fibres and rock wool etc. The natural fibres include wood pulp such as cellulose. Combination of organic and inorganic fibres can also be used.

The retention aid can be any material that is added to the stock to increase the retention of the X type adsorbent containing lithium cation. Various types of additives such as inorganic salts and organic polyelectrolytes can be useful as retention aids in papermaking.

In addition to retention aids, a binder can be added to add strength and specialized properties, such as flexibility to the finished sheets.

The preferred polymeric organic binders are starch, polyvinyl alcohols, acrylics, polyurethane, polyethylene glycol, polypropylene glycol, polyacrylic acid, polyamide and polyamine. Non polymeric binders having a functionality of a carboxylic acid, an aldehyde, an amino acid, an amine, and an amine can also be used. In general, these polymeric and non-polymeric binders have a hydrogen bonding functionality or coordinate covalent bond forming functionality to bind to fibres and zeolite particles. Inorganic binders such as silica and mineral silicates can also be used.

The temperature at which the stock preparation and handsheet making will be done depends on the nature of binder, flocculation agent, pore filling agent or any other chemical adhesive. Typically the method according to the invention is carried out in between 25 and 80° C.

Adsorbent-containing sheets prepared by a method according to the invention may be dried and then formed into a monolith of appropriate shape. In one embodiment of the invention, a flat sheet was bonded to a corrugated sheet to form a single-faced corrugated sheet, which is then spirally wrapped to make a monolith structure containing plurality of parallel channels. In another embodiment of the invention, the flat sheets are spirally wound with alternating layers of spacers.

The addition to the slurry of the lithium salt inhibits the leaching of lithium cations from the adsorbent material, maintains the pH in a basic range and inhibits the hydrolysis of lithium cations in the adsorbent material.

The retention of adsorbent in the handsheets is hardly affected by the addition of these salts. Typically, handsheets can contain up to 90 wt.% of adsorbent, the remainder being fibrous material and other chemical adhesives, mainly the binder.

The anions employed to form the lithium salt is typically selected from the group consisting of chloride, nitrate, sulphate, carbonate and acetate. Lithium hydroxide or a lithium alkoxide can be used instead of the lithium salt.

The lithium salt can be applied as an aqueous solution, made up from deionised water. The concentration of lithium salt in the solution can be varied to impact the desired amount of cations for application to the slurry. Typically the metal salt is dissolved to make a solution in a range from about 0.001 N to about 5.0 N with a range of about 0.005 to about 1.0, preferred.

The monolith structure when finally formed may take on any design and shape for use in gas separation processes. Preferably, the adsorbent is a lithium-containing or lithium and bivalent cation-containing, or a lithium and trivalent cation containing zeolite of type X, which has a Si/Al molar ratio of 0.9 to 1.25, preferably 1.0 to 1.1, and most preferably a Si/Al ratio of about 1.0.

In a method of (gas) separation according to the invention, a component of a gas mixture that is more strongly adsorbed than other components of the gas mixture is separated from the other components by contacting the gas mixture with the adsorbent under conditions which effect adsorption of the strongly adsorbed component. Preferred adsorption processes include PSA, including vacuum swing adsorption (VSA), TSA and combinations of these.

The temperature at which the adsorption step is carried out depends upon a number of factors, such as the particular gases being separated, the particular adsorbent being used, and the pressure at which the adsorption is carried out. In general, the adsorption step of the process is carried out at a temperature of at least about -190° C, preferably at a temperature of at least about -20° C, and most preferably at a temperature of at least about 0° C. The upper temperature limit at which the adsorption step of the process is carried out is generally about 400° C, and the adsorption step is preferably carried out at temperatures not greater than about 70° C, and most preferably carried out at temperatures not greater than about 50° C.

The adsorption step can be carried out at any of the usual and well known pressures employed for gas phase temperature swing adsorption and pressure swing adsorption processes. Typically the minimum absolute pressure at which the adsorption step is carried out is generally about 0.7 bara (bar absolute), preferably about 0.8 bara and most preferably about 0.9 bara. The adsorption can be carried out at pressures as high as 50 bara or more, but is preferably carried out at absolute pressures, and preferably not greater than about 20 bara, and most preferably not greater than about 10 bar.

When the adsorption process is PSA, the pressure during the regeneration step is reduced, usually to an absolute pressure in the range of about 0.1 to about 5 bara, and preferably to an absolute pressure in the range of about 0.175 to about 2 bara, and most preferably to an absolute pressure in the range of about 0.2 to about 1.1 bara.

As indicated above, the (gas) separation method according to the invention can be used to separate any two gases, provided that one of the gases is more strongly adsorbed by the adsorbents of the invention than is the other gas under either conditions of equilibrium or non-equilibrium, i.e., in the kinetic regime of a process. The process is particularly suitable for separating nitrogen from oxygen, nitrogen and argon from oxygen, carbon dioxide from air, dinitrogen oxide from air and for the separation of hydrocarbons, for example, the separation of alkenes, such as ethylene, propylene, etc., from alkanes, such as ethane, propane, etc., and the separation of straight-chain hydrocarbons from branched-chain hydrocarbons, e.g., the separation of n-butane from i-butane. The separation of these gases is preferably carried out at ambient temperature or higher, although the separation of nitrogen, oxygen and argon can be carried out at cryogenic temperatures.

It will be appreciated that it is within the scope of the present invention to utilize conventional equipment to monitor and automatically regulate the flow of gases within the system so that it can be fully automated to run continuously in an efficient manner.

The invention is further illustrated by the following examples in which, unless otherwise indicated, parts, percentages and ratios are on a weight basis. Only Example 8 describes a method of preparing an adsorbent in accordance with the invention.

## EXAMPLE 1

Lithium and rare-earth containing LSX (LiRELSX) sample was made as disclosed in the EXAMPLE 1 of US Pat. 5,464,467.

## EXAMPLES 2-4

Li,RELSX sample prepared in Example 1 was agitated at 50° C for 2 h in an aqueous solution with different concentrations of LiOH (Aldrich Chemical Co.). 5.0 g of zeolite was first dispersed in 250 ml of deionised water and different amounts of LiOH salt was added to get the appropriate concentration. The concentration of LiOH solution and the resultant pH for each of the examples are summarized in Table 1.

### TABLE 1
The concentration of LiOH solution and the pH in the preparation of LiRELSX samples.

| Example | LiOH concentration, M | slurry pH |
|---------|----------------------|-----------|
| 2 | 0.000 | 10.5 |
| 3 | 0.007 | 11.0 |
| 4 | 0.015 | 11.4 |

## EXAMPLE 5

Adsorption isotherms of nitrogen ($N_2$) and oxygen ($O_2$) on the products of examples -1-4 were measured gravimetrically using Cahn 2000 Series microbalance enclosed in a stainless steel vacuum/pressure system. About 100 mg of samples carefully evacuated and its temperature increased to 450° C at a rate of 1°-2° C per minute. The adsorption isotherms for nitrogen and oxygen were measured at 25° C in the pressure range 20-6900 mbar for nitrogen and 20-2000 mbar for oxygen and the data fitted to a single and multiple site langmuir isotherm model. The fits to the nitrogen data were used to calculate the effective capacity for nitrogen at 25° C and $N_2/O_2$ selectivities. The effective nitrogen capacity defined as the difference between the nitrogen capacity at 1000 mbar and that at 300 mbar gives a good indication of the capacity of the adsorbent in a PSA process operated between upper and lower pressures in this range. The selectivities of the samples for nitrogen over oxygen in air at 300 and 1000 mbar and 25° C were derived from the pure gas isotherms for nitrogen and oxygen using Langmuir mixing rules (Ref. e.g. A.L. Myers: AIChE: 29(4), (1983), p691-693). The usual definition for selectivity was used, where the selectivity (S) is given by:

$$S = (X_{N2}/Y_{N2})/(X_{O2}/Y_{O2})$$

where $X_{N2}$ and $X_{O2}$ are the mole fractions of nitrogen and oxygen, respectively, in the adsorbed phases, and $Y_{N2}$ and $Y_{O2}$ are the mole fractions of nitrogen and oxygen, respectively, in the gas phase.

The adsorption results for the samples from examples 1-4 are given Table 2.

### TABLE 2
Adsorption capacities of LiRELSX powders washed with water containing different amount of LiOH

| Sample Name | Effective $N_2$ capacity | $N_2/O_2$ selectivity | |
|-------------|--------------------------|------------------------|----------|
| | mmol/g | 1000 mbar | 300 mbar |
| LiRELSX-example1 | 0.589 | 6.1 | 9.3 |
| LiRELSX-example2 | 0.515 | 5.4 | 7.9 |
| LiRELSX-example3 | 0.580 | 5.9 | 8.6 |
| LiRELSX-example4 | 0.605 | 6.2 | 9.1 |

## EXAMPLE 6

The samples from examples 1-4 were analyzed by Inductively Coupled Plasma Atomic Emission Spectroscopy (ICP-AES) using an ARL-3510 Sequential spectrometer. The relative Li content of these samples, washed in an aqueous solution containing amounts of LiOH, is compared with parent LiRELSX samples in Table 3. The relative Li content defined as the amount of Li present in the washed LiRELSX as compared to the parent LiRELSX sample.

**TABLE 3**

Composition of LiRELSX samples prepared in examples 1-4.

| Sample | Relative Li content |
|---|---|
| LiRELSX-example1 | 1.000 |
| LiRELSX-example2 | 0.912 |
| LiRELSX-example3 | 0.968 |
| LiRELSX-example4 | 1.027 |

### EXAMPLE 7

A slurry was made by adding a fibrillated or non-fibrillated fibre to the DI water. An adsorbent containing slurry, prepared by adding DI water to LiRELSX zeolite, was then added to the above slurry containing fibre under stirring. A retention aid and a binder were added allowing fibres and adsorbent materials to flocculate so that they can be easily retained on the forming wire. The stock preparation is carried out at 47° C. The stock is added to the handsheet mould and water is drained by gravitational forces. The sheet thus formed is pressed by roller press to remove the water. The sheet was then dried at 100° C for 5 min.

### EXAMPLE 8

Example 7 was repeated with the addition of LiOH salt to the adsorbent / adsorbent suspension and before the retention aid and binder were added.

### EXAMPLE 9

Handsheets from examples 7 and 8 were activated at 400° C for 10 hours in the flow of nitrogen in the oven and were again activated at 400° C for 1 h in-situ during adsorption measurements. The effective nitrogen capacity and $N_2/O_2$ selectivities as defined in example 6 are given in Table 4.

**TABLE 4**

Influence of the addition of LiOH on adsorption capacity and selectivities of L1-17 embedded sheets

| | Effective $N_2$ capacity mmol/g | N2/O2 selectivity | |
|---|---|---|---|
| | | 1000 mbar | 300 mbar |
| Sheet from example 7 | 0.569 | 5.5 | 7.8 |
| Sheet from example 8 | 0.574 | 6.5 | 9.1 |

### EXAMPLE 10

Handsheets were calcined at 580° C in air to decompose all non-zeolitic material. The resulting white zeolite powder samples from handsheets of examples 7 and 8 were analyzed by ICP-AES as described in EXAMPLE 7 and the results are given in Table 5.

**TABLE 5**

LiRELSX in handsheet with and without LiOH addition.

| Sample | Relative Li content |
|---|---|
| Sheet from example 7 | 0.886 |
| Sheet from example 8 | 0.964 |

While this invention has been described with respect to particular embodiments thereof, it is apparent that numerous other forms and modifications of the invention will be obvious to those skilled in the art. The appended claims and this invention generally should be construed to cover all such obvious forms and modifications which are within the scope of the present invention.

## EP 1 188 478 B1

**Claims**

1. A method of preparing an adsorbent-containing sheet from a slurry comprising a mixture of type X zeolite adsorbent, fibres, binder, and flocculating agent in water, **characterised in that** the water is deionised water, the type X zeolite adsorbent contains lithium cations, and there is added to said slurry a lithium compound which is a lithium salt, lithium hydroxide or a lithium alkoxide so as to inhibit leaching of lithium cations from the adsorbent.

2. A method according to Claim 1, wherein said lithium compound is added in an aqueous solution made with deionised water.

3. A method according to claim 1 or claim 2, wherein said adsorbent containing sheet is formed into a shaped monolith adsorbent.

4. A method according to any one of the preceding claims, wherein said metal salt has an anion selected from the group consisting of chloride, nitrate, sulphate, carbonate, and acetate.

5. A method according to any one of claims 1 to 4, wherein said lithium compound is lithium hydroxide.

6. A method according to Claim 2, wherein said lithium compound is present in said aqueous solution in an amount ranging from about 0.001 N to about 1.0 N.

7. A method according to any one of the preceding claims wherein said type X zeolite adsorbent contains in addition to lithium cations, either bivalent cations or trivalent cations.

8. A method according to any one of the preceding claims, wherein said adsorbent is a low silicon type X adsorbent.

9. A method according to any one of the preceding claims, wherein said slurry further comprises a retention aid.

10. A method according to any one of the preceding claims, wherein said slurry further comprises a pore filling agent and a suspending agent.

11. A method of separating a first gaseous component from a gas mixture comprising said first gaseous component and a second gaseous component comprising:

   (a) passing the gaseous mixture into an adsorption zone containing a monolith adsorbent as prepared by a method according to claim 3 or any preceding claim dependent therefrom, wherein said monolith adsorbent is capable of separating said first gaseous component from said second gaseous component; and
   (b) recovering the non-preferentially adsorbed gaseous component from said adsorption zone.

**Patentansprüche**

1. Verfahren zur Herstellung eines adsorptionsmittelhaltigen Blatts aus einer Schlämme, die ein Gemisch aus Typ-X-Zeolith-Adsorptionsmittel, Fasern, Bindemittel und Flockungsmittel in Wasser enthält, **dadurch gekennzeichnet, daß** das Wasser deionisiertes Wasser ist, das Typ-X-Zeolith-Adsorptionsmittel Lithium-Kationen enthält, und daß in die Schlämme eine Lithiumverbindung zugegeben wird, welche ein Lithiumsalz, Lithiumhydroxid oder ein Lithiumalkoxid ist, um ein Auslaugen von Lithium-Kationen aus dem Adsorptionsmittel zu hemmen.

2. Verfahren nach Anspruch 1, wobei die genannte Lithiumverbindung in einer mit deionisiertem Wasser hergestellten wässrigen Lösung zugegeben wird.

3. Verfahren nach Anspruch 1 oder Anspruch 2, wobei das adsorptionsmittelhaltige Blatt zu einem geformten Monolith-Adsorptionsmittel gebildet wird.

4. Verfahren nach einem der vorhergehenden Ansprüche, wobei das genannte Metallsalz ein Anion hat, das aus der Gruppe ausgewählt ist, die aus Chlorid, Nitrat, Sulfat, Karbonat und Azetat besteht.

5. Verfahren nach einem der Ansprüche 1 bis 4, wobei die genannte Lithiumverbindung Lithiumhydroxid ist.

**6.** Verfahren nach Anspruch 2, wobei die genannte Lithiumverbindung in der wässrigen Lösung in einer Menge im Bereich von etwa 0,001 N bis etwa 1,0 N vorhanden ist.

**7.** Verfahren nach einem der vorhergehenden Ansprüche, wobei das genannte Typ-X-Zeolith-Adsorptionsmittel zusätzlich zu Lithium-Kationen entweder bivalente Kationen oder trivalente Kationen enthält.

**8.** Verfahren nach einem der vorhergehenden Ansprüche, wobei das genannte Adsorptionsmittel ein niedriges Silizium-Typ-X-Adsorptionsmittel ist.

**9.** Verfahren nach einem der vorhergehenden Ansprüche, wobei die genannte Schlämme weiter eine Retentionshilfe enthält.

**10.** Verfahren nach einem der vorhergehenden Ansprüche, wobei die genannte Schlämme weiter ein Porenfüllmittel und ein Suspensionsmittel enthält.

**11.** Verfahren zum Trennen einer ersten gasförmigen Komponente aus einem Gasgemisch, das die genannte erste gasförmige Komponente und eine zweite gasförmige Komponente enthält, mit:

a) Leiten des gasförmigen Gemischs in eine Adsorptionszone, die ein Monolith-Adsorptionsmittel enthält, das nach einem Verfahren gemäß Anspruch 3 oder irgendeinem davon abhängigen vorhergehenden Verfahren hergestellt ist, wobei das genannte Monolith-Adsorptionsmittel in der Lage ist, die genannte erste gasförmige Komponente von der genannten zweiten gasförmigen Komponente zu trennen, und
b) Rückgewinnen der nicht bevorzugt adsorbierten gasförmigen Komponente aus der Adsorptionszone.

**Revendications**

**1.** Procédé de préparation d'une feuille contenant un adsorbant à partir d'une suspension comprenant un mélange d'adsorbant zéolithe de type X, de fibres, de liant, et d'un floculant dans de l'eau, *caractérisé en ce que* l'eau est de l'eau désionisée, l'adsorbant zéolithe de type X contient des cations lithium, et *qu'on* ajoute à ladite suspension un composé au lithium qui est un sel de lithium, de l'hydroxyde de lithium ou un alcoxyde de lithium, afin d'inhiber la lixiviation des cations lithium de l'adsorbant.

**2.** Procédé selon la revendication 1, dans lequel ledit composé lithium est ajouté dans une solution aqueuse préparée avec de l'eau désionisée.

**3.** Procédé selon la revendication 1 ou la revendication 2, dans lequel ladite feuille contenant un adsorbant est formée dans un adsorbant monolithe mis en forme.

**4.** Procédé selon l'une quelconque des revendications précédentes, dans lequel ledit sel métallique possède un anion choisi dans le groupe se composant de : chlorure, nitrate, sulfate, carbonate et acétate.

**5.** Procédé selon l'une quelconque des revendications 1 à 4, dans lequel ledit composé lithium est l'hydroxyde de lithium.

**6.** Procédé selon la revendication 2, dans lequel ledit composé lithium est présent dans ladite solution aqueuse selon une quantité comprise entre 0,001 N environ et 1,0 N environ.

**7.** Procédé selon l'une quelconque des revendications précédentes, dans lequel ledit adsorbant zéolithe de type X contient, en plus des cations lithium, soit des cations bivalents, soit des cations trivalents.

**8.** Procédé selon l'une quelconque des revendications précédentes, dans lequel ledit adsorbant est un adsorbant de type X à faible teneur en silicium.

**9.** Procédé selon l'une quelconque des revendications précédentes, dans lequel ladite suspension comprend additionnellement un adjuvant de rétention.

**10.** Procédé selon l'une quelconque des revendications précédentes, dans lequel ladite suspension comprend additionnellement un agent bouche-pores et un agent de suspension.

11. Procédé de séparation d'un premier composant gazeux d'avec un mélange de gaz comprenant un premier composant gazeux et un deuxième composant gazeux, comprenant :

(a) le passage du mélange gazeux dans une zone d'adsorption contenant un adsorbant monolithe préparé par un procédé selon la revendication 3 ou selon l'une quelconque des revendications précédentes en dépendance de celle-ci, dans lequel ledit adsorbant monolithe est capable de séparer ledit premier composant gazeux dudit deuxième composant gazeux ; et
(b) la récupération du composant gazeux non préférentiellement adsorbé, de ladite zone d'adsorption.